(19) Europäisches Patentamt
European Patent Office
Office européen des brevets

(11) **EP 3 598 213 A1**

(12) **EUROPÄISCHE PATENTANMELDUNG**

(43) Veröffentlichungstag:
**22.01.2020 Patentblatt 2020/04**

(51) Int Cl.:
***G02C 7/06*** *(2006.01)*

(21) Anmeldenummer: **18184779.9**

(22) Anmeldetag: **20.07.2018**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **Carl Zeiss Vision International GmbH
73430 Aalen (DE)**

(72) Erfinder:
• **Kelch, Gerhard**
  **73434 Aalen (DE)**
• **Menke, Christoph**
  **73447 Oberkochen (DE)**
• **Wietschorke, Helmut**
  **73433 Aalen (DE)**

(74) Vertreter: **Carl Zeiss AG - Patentabteilung
Carl-Zeiss-Strasse 22
73447 Oberkochen (DE)**

(54) **GLEITSICHT-BRILLENGLAS MIT RÄUMLICH VARIIERENDEM BRECHUNGSINDEX**

(57) Die Erfindung betrifft ein Gleitsicht-Brillenglas, welches ein Substrat mit einer Vorderfläche und einer Rückfläche umfasst, welches aus einem Material mit räumlich variierenden Brechungsindex besteht, wobei die Vorderfläche und/oder die Rückfläche eine Freiform-flächengeometrie besitzt/besitzen. Das Gleitsicht-Brillenglas erfüllt folgende optische Anforderungen: (1) eine verordnete dioptrische Wirkung im Fern-Konstruktionsbezugspunkt innerhalb der zulässigen Grenzabweichungen nach DIN EN ISO 8980-2:2004 und eine verordnete dioptrische Wirkung im Nah-Konstruktionsbezugspunkt innerhalb der zulässigen Grenzabweichungen nach DIN EN ISO 8980-2:2004, (2) einen monoton stetigen Anstieg der dioptrischen Wirkung zwischen Fern-Konstruktionsbezugspunkt und Nah-Konstruktionsbezugspunkt auf einer Hauptblicklinie und (3) einen Progressionskanal, der den Fern-Konstruktionsbezugspunkt und den Nah-Konstruktionsbezugspunkt umschließt. Das erfindungsge-mäße Gleitsicht-Brillenglas ist dadurch gekennzeichnet, dass die Freiformflächengeometrie der Vorderfläche und/oder der Rückfläche des Gleitsicht-Brillenglases und die räumliche Variation des Brechungsindex derart aufeinander abgestimmt sind, dass ein Vergleichs-Gleitsicht-Brillenglas mit gleicher Geometrie aber basierend auf einem Substrat aus einem Material mit räumlich nicht variierendem Brechungsindex wenigstens eine der optischen Anforderungen (1) bis (3) nicht erfüllt.

**Fig. 3d**

**Beschreibung**

Die Erfindung betrifft ein Erzeugnis umfassend (i) ein Gleitsicht-Brillenglas oder (ii) eine auf einem Datenträger befindliche Darstellung des Gleitsicht-Brillenglases oder (iii) einen Datenträger mit einer virtuellen Repräsentation des Gleitsicht-Brillenglases nach dem Oberbegriff des Patentanspruchs 1.

Gleitsicht-Brillengläser sind seit Jahrzehnten in der Brillenoptik bekannt und verbreitet. Wie Mehrstärken-Brillengläser (i.A. Zwei- und Dreistärkengläser) stellen sie dem Alterssichtigen (Presbyopen) eine zusätzliche optische Wirkung im unteren Teil des Brillenglases zum Betrachten naher Objekte, z.B. beim Lesen, zur Verfügung. Diese wird benötigt, da die Augenlinse mit zunehmendem Alter ihre Eigenschaft, auf nahe Objekte zu fokussieren, mehr und mehr einbüßt. Gleitsicht-Brillengläser bieten gegenüber diesen Mehrstärken-Brillengläsern den Vorteil, eine stufenlose Zunahme der optischen Wirkung vom Fernteil zum Nahteil bereitzustellen, so dass nicht nur in Ferne und Nähe, sondern auch in allen Zwischenentfernungen ein scharfes Sehen gewährleistet ist.

Gleitsicht-Brillengläser werden im Allgemeinen bisher aus einem Material mit konstanter Brechzahl hergestellt, d.h., die optische Wirkung des Brillenglases wird nur durch entsprechende Formgebung der beiden an Luft grenzenden Flächen (Vorder- bzw. objektseitige Fläche, sowie Rück- bzw. augenseitige Fläche) des Brillenglases festgelegt. Um die stufenlose Zunahme der optischen Wirkung in einem Gleitsicht-Brillenglas zu erzeugen, muss auf mindestens einer der beiden Glasflächen eine entsprechende kontinuierliche Änderung der Flächenkrümmung vorhanden sein. Differentialgeometrische Eigenschaften von Flächen, die mindestens zweimal stetig differenzierbar sind, führen jedoch unvermeidbar zu nicht erwünschten optischen Abbildungsfehlern bei Gleitsicht-Brillengläsern aus einem Material mit konstantem Brechungsindex.

Diese Eigenschaften werden auf den "Satz von Minkwitz" zurückgeführt (Minkwitz, G., "Über den Flächenastigmatismus bei gewissen symmetrischen Asphären.", Optica Acta, 10(3), Nr.3 Juli 1963, S.223-227). Minkwitz sagt aus, dass auf einer mindestens zweimal stetig differenzierbaren Fläche seitlich einer Nabelpunktlinie mit stetig zu- oder abnehmender Krümmung der Flächenastigmatismus sich doppelt so schnell ändert, wie die Krümmung entlang dieser Linie. In jedem Punkt der Fläche ist der Flächenastigmatismus der Betrag der Differenz der Hauptkrümmungen der Fläche in diesem Punkt multipliziert mit der Brechzahldifferenz vor und hinter der Fläche am Flächenpunkt. Zur Definition von Flächenastigmatismus und mittlerem Flächenbrechwert siehe Diepes H., Blendowske R., "Optik und Technik der Brille", 2. Auflage, Heidelberg 2005, S.256.

Dieser Flächenastigmatismus erzeugt in der optischen Wirkung der Brillenlinse für den Träger eine Unschärfe, die das Auge nicht ausgleichen kann. Damit sind alle Gleitsicht-Brillengläser, die nach der oben beschriebenen Art hergestellt wurden, mit Abbildungsfehlern (Restastigmatismus) seitlich des "Progressionskanal" genannten Bereichs scharfen Sehens im Übergang von Ferne zu Nähe behaftet. Genauer gesagt entspricht die Beziehung zwischen dem Anstieg des mittleren Flächenbrechwertes entlang der Nabelpunktlinie und dem dadurch indizierten seitlichen Flächenastigmatismus entsprechend dem Satz von Minkwitz weitgehend der Beziehung zwischen dem vertikalen dioptrischen Wirkungsanstieg im Gleitsicht-Brillenglas und dem dadurch indizierten seitlichen Anstieg des astigmatischen Fehlers (Restastigmatismus) für den Brillenträger im Progressionskanal. Der Progressionskanal ist dabei nach DIN EN ISO 13666:2012, Absatz 14.1.25 der Bereich eines Gleitsicht-Brillenglases, der scharfes Sehen für Entfernungen ermöglicht, die zwischen der Ferne und der Nähe liegen. Unter vertikalem dioptrischem Wirkungsanstieg versteht man den Anstieg der mittleren Wirkung des Brillenglases für den Brillenträger in der Progressionszone in vertikaler Richtung. Im Nahbereich wird die mittlere Wirkung des Fernbereichs plus der verordneten Addition erreicht. In jedem Durchblickpunkt des Gleitsichtbrillenglases ergibt sich für den Brillenträger in der entsprechenden Blickrichtung entlang des Hauptstrahls eine aus zwei Hauptschnittbrechwerten bestehende fokussierende Wirkung. Das arithmetische Mittel dieser Hauptschnittbrechwerte ist die mittlere Wirkung.

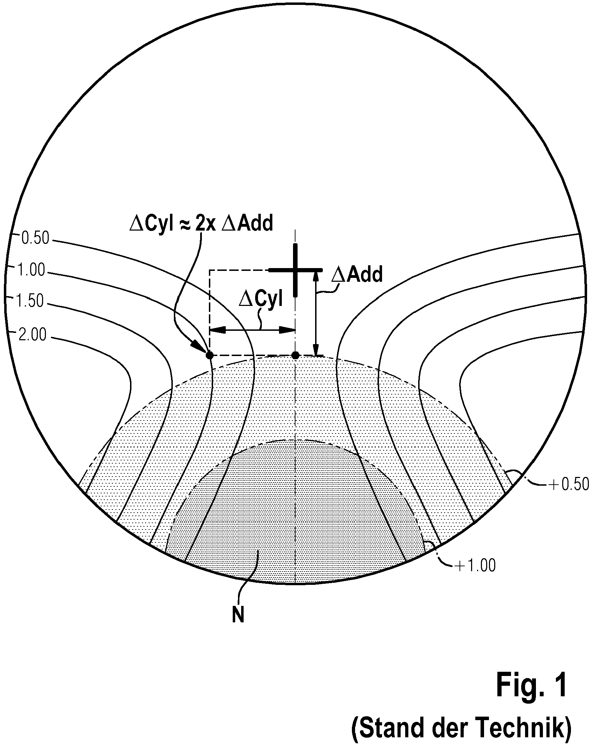

In der Mitte des Progressionskanals verläuft die Hauptblicklinie, welche die Gesamtheit aller Durchblickpunkte durch die Fläche bei der Blickbewegung des Auges auf Objektpunkte geradeaus vor dem Brillenträger von der Ferne zur Nähe darstellt. Die Fig. 1 illustriert diesen Zusammenhang. Das Symbol ∆Add in der Zeichnung ist der Gradient der mittleren Wirkung in Richtung der Nabelpunktlinie. Das Symbol ∆Cyl in der Zeichnung ist der Gradient des Astigmatismus. Das Symbol N weist auf den Verlauf der Nabelpunktlinie hin. Unter Astigmatismus ist vorliegend die astigmatische Abweichung von der für den Brillenträger verordneten astigmatischen Wirkung unter Berücksichtigung der Achslage zu verstehen. Die Berechnung von mittlerer Wirkung und astigmatischer Abweichung in einem Durchblickpunkt auf dem Brillenglas erfolgt im Brillenträgerstrahlengang. Dieser Strahlengang beschreibt den Lichtweg entlang des Hauptstrahls, der den vom Brillenträger angeblickten Objektpunkt mit dem Augendrehpunkt verbindet.

Damit ist ein einfacher Zusammenhang zwischen dem Wirkungsanstieg im Gleitsicht-Brillenglas und der Breite des Progressionskanals, in dem scharfes Sehen möglich ist, gegeben. Eine Überwindung dieser Gesetzmäßigkeit ist äußerst erstrebenswert, da ein breiterer Progressionskanal eine deutliche Verbesserung der Nutzbarkeit des Glases für das Sehen in mittleren Entfernungen bedeutet. Zum Satz von Minkwitz siehe auch Diepes H., Blendowske R. "Optik und Technik der Brille", 2. Auflage, Heidelberg 2005, S.257f.

Die WO 89/04986 A1 beschäftigt sich mit dem Einsatz von Materialien mit variablem Brechungsindex bei Gleitsicht-Brillengläsern. Sie nennt auf Seite 3 drei Möglichkeiten zur Verwendung eines variierenden Brechungsindex, nämlich

- Durch die Variation des Brechungsindex wird der Wirkungsanstieg entlang einer der geschwungenen Hauptblicklinie folgenden oder in einer Ebene liegenden, der Hauptblicklinie angepassten Linie erzeugt bzw. verstärkt.

Als Hauptblicklinie wird dabei diejenige Linie auf der Vorderfläche des Brillenglases bezeichnet, die die Hauptdurchblickpunkte für das Sehen in die Ferne und in die Nähe miteinander verbindet und auf der die Durchstoßpunkte der Sehstrahlen für Zwischenentfernungen in Richtung "geradeaus" liegen. Die Hauptblicklinie ist eine im Fern- und im Nahteil angenähert senkrecht und im Zwischenteil gewunden verlaufende Linie.

- Durch den variierenden Brechungsindex wird der Astigmatismus entlang der Hauptblicklinie ganz oder teilweise behoben.

- Durch die Verwendung eines Gradientenmediums werden Korrekturen von Abbildungsfehlern seitlich des Hauptmeridians vorgenommen.

Denkt man sich die drei Effekte "Wirkungsanstieg entlang der Hauptblicklinie", "Beseitigung des Astigmatismus entlang der Hauptblicklinie" und "seitliche Korrekturen" hauptsächlich, teilweise oder nicht von der Variation des Brechungsindex getragen, dann ergeben sich $3^3 = 27$ Kombinationsmöglichkeiten, die sich alle mathematisch charakterisieren lassen.

Das auf Seite 2, vorletzter Abschnitt angegebene Ziel der WO 89/04986 A1 besteht darin, "dass es möglich ist, durch die Verwendung eines variierenden Brechungsindex bei der Herstellung der Linsenflächen so große Vorteile zu erzielen, dass sich insgesamt bei vergleichbaren Abbildungseigenschaften eine vereinfachte Herstellung ergibt."

Auf Seite 5 der WO 89/04986 A1 wird auch kurz auf den Satz von Minkwitz eingegangen:
"Wenn zusätzlich auch der Astigmatismus entlang des Hauptmeridians durch die Variation des Brechungsindex verringert wird, so bedeutet dies, dass auch die Einschränkung bei der Gestaltung des Brillenglases, dass der Flächenastigmatismus längs des Hauptmeridians bzw. der Hauptblicklinie klein sein soll, wegfällt, so dass für das erfindungsgemäße Brillenglas nicht dem Satz von Minkwitz unterworfen ist, und das Brillenglas unter anderen Gesichtspunkten wesentlich günstiger gestaltet werden kann."

Insgesamt wird in der WO 89/04986 A1 auf die einfachere und günstigere Herstellbarkeit der Brillengläser bei vergleichbaren Abbildungseigenschaften abgehoben. Die Erwähnung von verbesserten Abbildungseigenschaften auf Seite 12 oben bleibt im Ungefähren: "Ausdrücklich soll darauf hingewiesen werden, dass bei der Optimierung die Korrektur von Abbildungsfehlern nicht beachtet worden ist, und dass sich dennoch Gläser mit sehr guten Abbildungseigenschaften in den seitlichen Bereichen ergeben haben. Eine weitere Verbesserung der Abbildungseigenschaften in den Bereichen seitlich des Hauptmeridians erhält man durch weitere Optimierung der Indexfunktion. In den Beispielen sind keine Verbesserungen seitlich des Progressionskanals im Vergleich zu herkömmlichen Gläsern erkennbar."

Die WO 99/13361 A1 beschreibt ein sogenanntes "MIV"-Linsenobjekt, welches alle funktionellen Merkmale von Gleitsichtgläsern aufweisen soll, nämlich ein Fernteil, ein Nahteil und eine Progressionszone, deren Randbereiche aber frei von astigmatischen Aberrationen sein sollen. Dieses Dokument beschreibt, dass ein derartiges Linsenobjekt eine sphärische Vorder- und eine sphärische Rückfläche aufweisen kann. Das Linsenobjekt soll eine Progressionszone mit vom Fernteil zum Nahteil kontinuierlich zunehmendem Brechungsindex aufweisen. Mit einer derartigen Ausführung lassen sich allerdings in der Regel nicht alle gewünschten Additionen realisieren. Das Dokument führt daher aus: "Falls gewünscht, kann der Bereich von Zusätzen überbrückt werden, falls dies durch den einzigen variablen Brechungsindex unmöglich ist, auch durch Herstellen der Linsen mit einem Materialrohblock mit variablem Brechungsindex, wie oben beschrieben, und Bilden von Kurven mit variabler Geometrie wie die herkömmlicher progressiver Linsen, wodurch das Ergebnis erzielt wird, dass sie im Vergleich zu diesen letzteren eine viel höhere Wirkung aufweisen, da die Linse mit variierendem Brechungsindex in den verschiedenen Bereichen die gewünschte Addition unter Verwendung viel weniger differenzierter Kurven zwischen der Fernteilwirkung und der Nahteilwirkung mit einer Verringerung der Aberrationsfläche und einer Vergrößerung der Nutzsichtfläche bereitstellt."

Die US 2010/238400 A1 beschreibt jeweils aus mehreren Schichten bestehende Gleitsicht-Brillengläser. Wenigstens eine der Schichten kann einen variierenden Brechungsindex aufweisen, welcher bezüglich zweier orthogonal zueinander verlaufenden Meridianen beschrieben wird. Darüber hinaus kann zumindest eine der Flächen einer der Schichten eine progressive Flächengestalt aufweisen. Es ist beschrieben, dass der Brechungsindexverlauf in horizontaler Richtung zur Vollkorrektur der durch die Geometrie der Flächen verwendet werden kann.

Yuki Shitanoki et al: "Application of Graded-Index for Astigmatism Reduction in Progressive Addition Lens", Applied Physics Express, Bd. 2, 1. März 2009, Seite 032401 beschreibt durch Vergleich zweier mit Hilfe derselben Formschale abgegossener Gleitsicht-Brillengläser der Astigmatismus bei einem Gleitsicht-Brillenglas mit einem Brechungsindexgradienten gegenüber einem Gleitsicht-Brillenglas ohne einen Brechungsindexgradienten verringert werden kann.

Die EP 2 177 943 A1 beschreibt ein Verfahren zum Berechnen durch Optimierung eines optischen Systems, zum Beispiel einer ophthalmischen Linse, gemäß wenigstens einem Kriterium aus einer Liste von für den Seheindruck eines Probanden beeinflussenden Kriterien. Das Dokument schlägt vor, eine Kostenfunktion unter Berücksichtigung von Zielwerten und Kriteriumswerten zu minimieren. Es ist eine allgemeine Formel für eine derartige Kostenfunktion angegeben. Es werden u.a. die beiden Beispiele angegeben:

Abschnitt [0016]: "In einer Ausführungsform umfasst das zu optimierende arbeitende optische System mindestens zwei optische Oberflächen und die modifizierten Parameter sind mindestens die Koeffizienten der Gleichungen von zwei optischen Oberflächen des arbeitenden optischen Systems."

Abschnitt [0018]: "In einer Ausführungsform, in der das zu optimierende optische System mindestens zwei optische Oberflächen aufweist, wird die Modifikation des optischen Bearbeitungssystems so betrieben, dass zumindest der Index des arbeitenden optischen Systems modifiziert wird. Es ist möglich, eine Linse aus einem inhomogenen Material herzustellen, in dem sich ein Gradient im Brechungsindex befindet (bekannt als GRIN-Linse). Zum Beispiel kann die Verteilung des Index, der optimiert wird, axial oder radial sein und / oder kann von der Wellenlänge abhängen."

Die Aufgabe der vorliegenden Erfindung ist es, die Abbildungseigenschaften von Gleitsicht-Brillengläsern im Vergleich zum Stand der Technik deutlich zu verbessern. Dabei sollen insbesondere die Einschränkungen durch den Satz von Minkwitz reduziert und möglichst beseitigt werden.

Diese Aufgabe wird durch ein Erzeugnis mit den Merkmalen des Patentanspruchs 1 gelöst. Vorteilhafte Ausführungen und Weiterbildungen sind Gegenstand der Unteransprüche.

Konkret werden zur Lösung der Aufgabe Materialien mit variablem Brechungsindex (GRIN) eingesetzt. Eine Vereinfachung der Flächengeometrie wird dabei im Gegensatz zur WO 89/04986 A1 gerade nicht angestrebt.

Im Gegenteil, erfinderseits ist festgestellt worden, dass im Vergleich zum Stand der Technik wesentliche Verbesserungen der Abbildungsqualität nur durch simultane Optimierung der Verteilung der Brechzahl und der Gestalt einer Freiformfläche erreicht werden. Dies gilt besonders in den Bereichen seitlich des Progressionskanals.

Die Erfindung ist nunmehr durch eine der folgenden Alternativen gekennzeichnet:

(a) Der Brechungsindex ändert sich nur in einer ersten Raumdimension und in einer zweiten Raumdimension und ist in einer dritten Raumdimension konstant, wobei eine Verteilung des Brechungsindex in der ersten Raumdimension und der zweiten Raumdimension weder eine Punkt- noch eine Achsensymmetrie aufweist.

(b) Der Brechungsindex ändert sich in einer ersten Raumdimension und in einer zweiten Raumdimension und in einer dritten Raumdimension. Eine Verteilung des Brechungsindex in der ersten Raumdimension und der zweiten Raumdimension weist in allen Ebenen senkrecht zu der dritten Raumdimension weder eine Punkt- noch eine Achsensymmetrie auf.

(c) Der Brechungsindex ändert sich in einer ersten Raumdimension und in einer zweiten Raumdimension und in einer dritten Raumdimension. Eine Verteilung des Brechungsindex weist überhaupt keine Punkt- und keine Achsensymmetrie auf.

Die dritte Raumdimension im Fall (a) oder (b) verläuft in einer bevorzugten Ausführungsvariante der Erfindung in einer Richtung, die

- um nicht mehr als 5° von der Nullblickrichtung bei bestimmungsgemäßem Gebrauch differiert oder
- um nicht mehr als 10° von der Nullblickrichtung bei bestimmungsgemäßem Gebrauch differiert oder
- um nicht mehr als 20° von der Nullblickrichtung bei bestimmungsgemäßem Gebrauch differiert oder
- um nicht mehr als 5° von der Hauptblickrichtung bei bestimmungsgemäßem Gebrauch differiert oder
- um nicht mehr als 10° von der Hauptblickrichtung bei bestimmungsgemäßem Gebrauch differiert oder
- um nicht mehr als 20° von der Hauptblickrichtung bei bestimmungsgemäßem Gebrauch differiert oder
- um nicht mehr als 5° von der Richtung des Normalenvektors der Vorderfläche in der geometrischen Mitte des Gleitsicht-Brillenglases differiert oder
- um nicht mehr als 10° von der Richtung des Normalenvektors der Vorderfläche in der geometrischen Mitte des Gleitsicht-Brillenglases differiert oder
- um nicht mehr als 20° von der Richtung des Normalenvektors der Vorderfläche in der geometrischen Mitte des Gleitsicht-Brillenglases differiert oder
- um nicht mehr als 5° von der Richtung des Normalenvektors am prismatischen Messpunkt differiert oder
- um nicht mehr als 10° von der Richtung des Normalenvektors am prismatischen Messpunkt differiert oder
- um nicht mehr als 20° von der Richtung des Normalenvektors am prismatischen Messpunkt differiert oder
- um nicht mehr als 5° von der Richtung des Normalenvektors am Zentrierpunkt differiert oder
- um nicht mehr als 10° von der Richtung des Normalenvektors am Zentrierpunkt differiert oder

- um nicht mehr als 20° von der Richtung des Normalenvektors am Zentrierpunkt differiert.

Der prismatische Messpunkt ist nach DIN EN ISO 13666:2013-10 - 14.2.12 (bei einem Gleitsicht-Brillenglas oder einem Gleitsicht-Brillenglasblank) vom Hersteller angegebener Punkt auf der Vorderfläche, in dem die prismatischen Wirkungen des fertigen Glases bestimmt werden müssen. Die Definition des Zentrierpunkts findet sich in der DIN EN ISO 13666:2013-10 im Abschnitt 5.20.

Die Freiformfläche ist nach der Erfindung vorzugsweise eine solche im engeren Sinn entsprechend dem Abschnitt 2.1.2 der DIN SPEC 58194 vom Dezember 2015, nämlich eine in Freiformtechnologie gefertigte Brillenglasfläche, die im Rahmen der Grenzen der Differentialgeometrie mathematisch beschrieben wird und weder punkt- noch achsensymmetrisch ist.

Als eine wesentliche Verbesserung ist die Reduktion des Restastigmatismus seitlich des Progressionskanals anzusehen, so dass die Breite des Progressionskanals zunimmt. Diese Breite ist definiert durch eine Schranke des Restastigmatismus, die vom Brillenträger als störend empfunden wird. Diese Schranke liegt üblicherweise im Bereich zwischen 0,25 Dioptrien und 0,50 Dioptrien. Weiterhin kann auch der maximale Restastigmatismus im Zwischenbereich, vorzugsweise im horizontalen Abstand von 20 mm von der Hauptblicklinie, reduziert werden.

Diese wesentlichen Verbesserungen werden gerade auch für ein Gleitsichtglas erreicht, welches ein unsymmetrisches (optisches) Design besitzt, d.h. dessen Verteilung der astigmatischen und sphärischen Restfehler für den Brillenträger über das gesamte Brillenglas keine Achsensymmetrie besitzt, bedingt durch die Anpassung des Designs an die Konvergenzbewegung des Auge des Brillenträgers beim Blick in die Nähe.

Es ergibt sich nach der erfindungsgemäßen Optimierung ein Gleitsicht-Brillenglas, welches mindestens eine Freiformfläche aufweist und eine nicht konstante, im Allgemeinen unsymmetrische, Verteilung des Brechungsindexes im Glas aufweist.

Dieses Gleitsicht-Brillenglas ist erfindungsgemäß in einer ersten Alternative dadurch gekennzeichnet, dass es die optischen Anforderungen des Brillenträgers gemäß der Verordnung nicht erfüllt, wenn man unter Beibehaltung der Geometrie der begrenzenden Flächen das GRIN-Material durch ein Material mit konstanter Brechzahl ersetzt.

Anders ausgedrückt besteht der Gegenstand der Erfindung in einem Erzeugnis umfassend

(i) ein Gleitsicht-Brillenglas oder
(ii) eine auf einem Datenträger befindliche Darstellung des Gleitsicht-Brillenglases oder
(iii) einen Datenträger mit einer virtuellen Repräsentation des Gleitsicht-Brillenglases, wobei

- das Gleitsicht-Brillenglas ein Substrat mit einer Vorderfläche und einer Rückfläche umfasst, welches aus einem Material mit räumlich variierenden Brechungsindex besteht,
- die Vorderfläche und/oder die Rückfläche eine Freiformflächengeometrie besitzt/besitzen,
- das Gleitsicht-Brillenglas einen Fern-Konstruktionsbezugspunkt und einen Nah-Konstruktionsbezugspunkt aufweist
- das Gleitsicht-Brillenglas folgende optische Anforderungen erfüllt:

(1) eine verordnete dioptrische Wirkung im Fern-Konstruktionsbezugspunkt liegt innerhalb der zulässigen Grenzabweichungen nach DIN EN ISO 8980-2:2004 und eine verordnete dioptrische Wirkung im Nah-Konstruktionsbezugspunkt liegt innerhalb der zulässigen Grenzabweichungen nach DIN EN ISO 8980-2:2004
(2) zwischen Fern-Konstruktionsbezugspunkt und Nah-Konstruktionsbezugspunkt steigt die dioptrische Wirkung monoton stetig an
(3) es gibt einen den Fern-Konstruktionsbezugspunkt und den Nah-Konstruktionsbezugspunkt umschließenden Progressionskanal, welcher dadurch definiert ist, dass der Restastigmatismus unterhalb eines Wertes aus der Gruppe

(a) 0,25 Dioptrien
(b) 0,38 Dioptrien
(c) 0,50 Dioptrien

liegt

- die Freiformflächengeometrie der Vorderfläche und/oder der Rückfläche des Gleitsicht-Brillenglases und die räumliche Variation des Brechungsindex sind derart aufeinander abgestimmt, dass ein Vergleichs-Gleitsicht-Brillenglas mit gleicher Geometrie aber räumlich nicht variierendem Brechungsindex wenigstens eine der optischen Anforderungen (1) bis (3) nicht erfüllt.

Die dioptrische Wirkung ist nach Abschnitt 9.3 DIN EN ISO 13666:2013-10 der Sammelbegriff für die fokussierende und die prismatische Wirkung eines Brillenglases. Sie umfasst demnach regelmäßig die aus sph, zyl, Achse, Addition bestehenden Daten zur dioptrischen Wirkung, die zur Korrektion der Fehlsichtigkeit des Brillenträgers nötig sind. In den Messpunkten, nämlich den Konstruktionsbezugspunkten nach DIN EN ISO 13666:2013-10 des Gleitsicht-Brillengases müssen die Messwerte gemäß den nach der Norm DIN 8980-2:2004 festgelegten Toleranzen eingehalten werden. Dies soll auch für die rezeptierten Wirkungen für den Brillenträger in den Bezugspunkten gelten. Der Verlauf dieses stetigen Anstiegs sowie die Progressionslänge werden durch die Auswahl des Glastyps (Glasdesigns) durch den Brillenträger festgelegt.

In einer zweiten Alternative lässt sich das erfindungsgemäße Gleitsicht-Brillenglas auch wie folgt charakterisieren:

Für das erfindungsgemäße Gleitsicht-Brillenglas mit nur einer Freiformfläche kann die Brechzahl des Gleitsicht-Brillenglases an der Stelle der Hauptblicklinie auf der Vorderfläche bestimmt werden, an dem im Gleitsicht-Brillenglas der Brillenträger den halben Wirkungsanstieg erfährt.

Mit Hilfe dieser Brechzahl lässt sich dann mittels der Krümmungsradien der Freiformfläche eine Verteilung des Flächenastigmatismus mit dieser konstanten Brechzahl für die Freiformfläche berechnen.

Für ein Gleitsicht-Brillenglas basierend auf einem Substrat aus einem Material konstanter Brechzahl nach dem Stand der Technik mit gleicher Lage der Freiformfläche und gleicher gegenüber liegender Fläche, das für die gleiche dioptrische Wirkung, die gleichen Gebrauchsbedingungen optimiert wurde und auch die gleiche Wirkungsverteilung für den Brillenträger aufweist, lässt sich auf die gleiche Weise eine Flächenastigmatismusverteilung der Freiformfläche ermitteln (berechnet mit der Brechzahl, die auch für das erfindungsgemäße Glas verwendet wurde).

Bedingt durch die verbesserten Abbildungseigenschaften im Progressionskanal wird das erfindungsgemäße Gleitsicht-Brillenglas dann in einem Bereich um die Hauptblicklinie im Zwischenbereich erhöhte Flächenastigmatismuswerte aufweisen.

Diese werden um mindestens um 0,25 dpt bis Add / 3 dpt über den entsprechenden Flächenastigmatismuswerten des Gleitsicht-Brillenglases nach dem Stand der Technik liegen, insbesondere falls das Gleitsicht-Brillenglas nach dem Stand der Technik ähnliche astigmatische Abweichungen für den Brillenträger entlang der Hauptblicklinie im Zwischenteil besitzt.

Der Vergleichsbereich kann dabei eine horizontale Ausdehnung beiderseits der Hauptblicklinie von bis zu 3 mm, 5 mm oder sogar 10 mm besitzen und vertikal mindestens den Bereich umfassen, in dem die Zusatzwirkung an der Hauptblicklinie für den Brillenträger zwischen 0,25 * Addition und 0.75 * Addition ansteigt.

Anders ausgedrückt besteht der Gegenstand der Erfindung in einem Erzeugnis umfassend

(i) ein Gleitsicht-Brillenglas oder
(ii) eine auf einem Datenträger befindliche Darstellung des Gleitsicht-Brillenglases oder
(iii) einen Datenträger mit einer virtuellen Repräsentation des Gleitsicht-Brillenglases, wobei

- das Gleitsicht-Brillenglas ein Substrat mit einer Vorderfläche und einer Rückfläche umfasst, welches aus einem Material mit räumlich variierenden Brechungsindex besteht,
- die Vorderfläche und/oder die Rückfläche eine Freiformflächengeometrie besitzt/besitzen,
- das Gleitsicht-Brillenglas einen Fern-Konstruktionsbezugspunkt und einen Nah-Konstruktionsbezugspunkt aufweist
- das Gleitsicht-Brillenglas folgende optische Anforderungen erfüllt:

(1) eine verordnete dioptrische Wirkung im Fern-Konstruktionsbezugspunkt liegt innerhalb der zulässigen Grenzabweichungen nach DIN EN ISO 8980-2:2004 und eine verordnete dioptrische Wirkung im Nah-Konstruktionsbezugspunkt liegt innerhalb der zulässigen Grenzabweichungen nach DIN EN ISO 8980-2:2004
(2) zwischen Fern-Konstruktionsbezugspunkt und Nah-Konstruktionsbezugspunkt steigt die dioptrische Wirkung monoton stetig an
(3) es gibt einen den Fern-Konstruktionsbezugspunkt und den Nah-Konstruktionsbezugspunkt umschließenden Progressionskanal, welcher dadurch definiert ist, dass der Restastigmatismus unterhalb eines Wertes aus der Gruppe

(a) 0,25 Dioptrien
(b) 0,38 Dioptrien
(c) 0,50 Dioptrien

liegt

- die Freiformflächengeometrie der Vorderfläche und/oder der Rückfläche des Gleitsicht-Brillenglases und die räumliche Variation des Brechungsindex derart aufeinander abgestimmt sind, dass ein erster rechnerisch ermittelter Flächenastigmatismus der Fläche mit der Freiformflächengeometrie an der Stelle der Hauptblicklinie auf der Vorderfläche, an dem das Gleitsicht-Brillenglas mit dem Substrat aus dem Material mit räumlich variierendem Brechungsindex die Hälfte des gesamten dioptrischen Wirkungsanstiegs erfährt, größer ist als ein zweiter rechnerisch ermittelter Flächenastigmatismus einer Fläche mit einer Freiformflächengeometrie eines Vergleichs-Gleitsicht-Brillenglases basierend auf einem Substrat aus einem Material mit räumlich nicht variierendem Brechungsindex an einer Stelle auf der Hauptblicklinie in dem das Vergleichs-Gleitsicht-Brillenglas mit dem Substrat aus dem Material mit räumlich nicht variierendem Brechungsindex die Hälfte des gesamten dioptrischen Wirkungsanstiegs erfährt. Die vorstehend angegebenen Stellen auf der Hauptblicklinie entsprechen also dem Ort halber Addition.

Der erste rechnerisch ermittelte Flächenastigmatismus wird auf Basis eines konstanten Brechungsindex berechnet, der einen Wert aufweist, der dem Wert des Brechungsindex des Substrats an der Stelle der Hauptblicklinie auf der Vorderfläche entspricht, an dem das Gleitsicht-Brillenglas mit dem Substrat aus dem Material mit räumlich variierendem Brechungsindex die Hälfte des gesamten dioptrischen Wirkungsanstiegs erfährt.
Die Fläche mit der Freiformflächengeometrie des Vergleichs-Gleitsicht-Brillenglases weist die gleiche Lage wie das erfindungsgemäße Gleitsicht-Brillenglas auf. Anders ausgedrückt: Ist bei dem erfindungsgemäßen Gleitsicht-Brillenglas die Freiformfläche die Vorderfläche, so gilt dies auch für das Vergleichs-Gleitsicht-Brillenglas. Ist bei dem erfindungsgemäßen Gleitsicht-Brillenglas die Freiformfläche die Rückfläche, so gilt dies auch für das Vergleichs-Gleitsicht-Brillenglas.

Das erfindungsgemäße Gleitsicht-Brillenglas und das Vergleichs-Gleitsicht-Brillenglas sollen darüber hinaus auch eine der Freiformfläche gegenüberliegende Fläche mit übereinstimmender Geometrie aufweisen.

Auch der dioptrische Wirkungsverlauf längs der Hauptblicklinie soll bei dem erfindungsgemäßen Gleitsicht-Brillenglas und dem Vergleichs-Gleitsicht-Brillenglas gleich sein.

Der Brechungsindex bzw. die Brechzahl des Vergleichs-Gleitsicht-Brillenglas soll gerade dem Wert entsprechen, welcher zur Berechnung des Flächenastigmatismus der Freiformfläche des erfindungsgemäßen Gleitsicht-Brillenglases verwendet wurde. Demnach soll der Brechungsindex einen Wert aufweisen, der dem Wert des Brechungsindex des Substrats an der Stelle der Hauptblicklinie auf der Vorderfläche entspricht, an dem das erfindungsgemäße Gleitsicht-Brillenglas mit dem Substrat aus dem Material mit räumlich variierendem Brechungsindex die Hälfte des gesamten dioptrischen Wirkungsanstiegs ist.

Die vorstehend angegebene Aufgabe wird durch diese beiden Alternativen vollumfänglich gelöst.

Eine Optimierung des erfindungsgemäßen Glases kann dabei z.B. von einem Design eines bestehenden optimierten Gleitsicht-Brillenglases nach dem Stand der Technik mit konstanter Brechzahl für die konkrete Verordnung, die konkreten Gebrauchsbedingungen (Vorneigung, Fassungsscheibenwinkel, Hornhautscheitelabstand, Zentrierung, ...) und den konkreten Dicken dieses Glases ausgehen.

Als Design bezeichnen wir hierbei die Verteilung der sphärischen und astigmatischen Restfehler für den Brillenträger über das gesamte Glas. Für dieses Gleitsicht-Brillenglas lässt sich eine Hauptblicklinie entsprechend der in der Beschreibungseinleitung angegebenen Definition bestimmen, für die insbesondere im Zwischenteil geringe astigmatische Restfehler erzielt werden können. Der Zwischenteil ist der gesamte Übergangsbereich zwischen Fernteil (Bereich für das Sehen in die Ferne, siehe Abschnitt 14.1.1 der DIN EN ISO 13666:2013-10, Abschnitt) und Nahteil (Bereich für das Sehen in der Nähe, siehe Abschnitt 14.1.3 der DIN EN ISO 13666:2013-10). Die DIN EN ISO 13666:2013-10 definiert in Abschnitt 14.1.2 als Zwischenteil den Teil eines Dreistärken-Brillenglases, das die dioptrische Wirkung für das Sehen in eine Entfernung besitzt, die zwischen Ferne und Nähe liegt. Vorliegend wird diese Definition erweitert.

Allerdings werden die astigmatischen Restfehler neben der Hauptblicklinie wegen dem Gesetz von Minkwitz in horizontaler Richtung ansteigen (bedingt durch den dioptrischen Wirkungsanstieg in vertikaler Richtung).

Ziel der Erfindung ist es, diese sphärischen und astigmatischen Restfehler, insbesondere die astigmatischen Restfehler neben der Hauptblicklinie (d.h. im zentralen Bereich des Zwischenteils) zu reduzieren.

Ausgehend von diesem Design lässt sich ein neues Zieldesign erzeugen, das die bisherige Verteilung der sphärischen und astigmatischen Fehler enthält, die aber speziell im zentralen Zwischenteil reduziert werden. Vorzugsweise werden dabei die astigmatischen Restfehler in einem Bereich um die Hauptblicklinie (z.B. der Bereich mit einem Abstand von 5, 10 bis 20 mm von der Hauptblicklinie) verringert, z.B. indem sie mit einem Faktor von 0,5 bis 0,8 multipliziert werden, um zu einem verbesserten Zieldesign zu kommen.

Das Zieldesign kann z.B. auch durch die Vorgabe von optischen, insbesondere sphärischen und astigmatischen Restfehlern an vielen Punkten festgelegt werden, die über die Vorderfläche des gesamten Glases verteilt sind. Dabei kann es Festlegungen für die Entfernungen der Objekte geben, für die die Wirkungen bzw. sphärischen und astigmatischen Restfehler für den Brillenträger beim Blick durch das Glas bestimmt werden. Darüber hinaus kann es Vorgaben für die Flächenkrümmungen an weiteren Punkten auf der Gleitsichtfläche, Dickenforderungen (insbesondere in der geometrischen Mitte und am Rand des Gleitsichtglases) und prismatische Forderungen an weiteren Punkten geben.

Jedem dieser optischen und geometrischen Vorgaben $v_{ij}$ kann an jedem der genannten Punkte $P_i$ eine individuelle Gewichtung $w_{ij}$ zugeordnet werden. Bestimmt man für ein Ausgangsglas (z.B. das für die konstante Brechzahl optimierte Gleitsichtglas) die Restfehler, Flächenkrümmungen, prismatische Wirkungen und Dicken $r_{ij}$ für die Vorgabe $ij$ an dem Punkt $P_i$, so kann man damit einen Gesamtfehler G

$$G = \sum_i \sum_j \left( w_{ij} * \left( r_{ij} - v_{ij} \right) \right)^2$$

bestimmen. Dieser von den optischen und geometrischen Glaseigenschaften abhängige Funktionswert G kann mittels bekannter mathematischer Methoden durch simultane Änderung der Flächengeometrie und der Brechzahlverteilung minimiert werden. Auf diese Weise erhält man ein Gleitsichtglas mit verbesserten Eigenschaften bzgl. der zuvor festgesetzten Forderungen.

Alternativ kann für die Optimierung des Gleitsichtglases mit einem Material mit variabler Brechzahl auch das ursprüngliche Zieldesign herangezogen werden, das heißt das Zieldesign, das für die Optimierung des Glases mit konstanter Brechzahl verwendet wurde. Dabei können die bei der Optimierung mit dem ursprünglichen Design verwendeten Gewichtungen verwendet bzw. auch verändert werden. Insbesondere kann die Gewichtung für die astigmatischen und sphärischen Restfehler im Progressionskanal erhöht werden, um verbesserte Eigenschaften des Gleitsichtglases im Progressionsbereich zu erzielen. Eine Erhöhung der Gewichtung im Progressionskanal ist dabei aber nur sinnvoll, falls die astigmatischen und sphärischen Fehler des optimierten Glases mit einem Material mit konstantem Brechzahl nicht schon mit den Vorgaben des (neuen) Zieldesigns übereinstimmen.

Falls das ursprüngliche Design vom Brillenträger bereits akzeptiert wurde, erhält man mit diesem Vorgehen auf jeden Fall ein verträglicheres Design für den Brillenträger, da die optischen Restfehler mit dem neuen Design reduziert werden. Insgesamt erreicht man ein neues verbessertes Zieldesign, das mit einem Material mit konstanter Brechzahl nicht erreichbar ist, aber mit diesem Zieldesign und durch simultane Optimierung der Gestalt der Freiformflächen und der Verteilung der Brechzahl für ein Material mit nichtkonstanter Brechzahl sich ein verbessertes Gleitsichtglasdesign erzielen lässt, das insbesondere einen breiteren Progressionskanal, geringere maximale astigmatische Restfehler im Zwischenbereich und damit auch eine geringere Verzeichnung im Zwischenbereich aufweist.

Die Erfindung wird nachfolgend anhand der Zeichnung näher beschrieben. Es zeigen:

Figur 1    eine Graphik mit einer Isorestastigmatismusverteilung eines Gleitsicht-Brillenglases mit einem Substrat aus einem Material mit konstanter Brechzahl zur Demonstration des Satzes von Minkwitz (Stand der Technik)

Figur 2    optische Eigenschaften eines Gleitsicht-Brillenglases mit einem Substrat aus einem Material mit konstanter Brechzahl von n=1,60 (Stand der Technik)

      a) mittlere Wirkung
      b) Restastigmatismus
      c) mittlerer Flächenbrechwert
      d) Flächenastigmatismus

Figur 3    optische Eigenschaften eines erfindungsgemäßen Gleitsicht-Brillenglases mit einem Substrat aus einem Material mit variierender Brechzahl

      a) mittlere Wirkung
      b) Restastigmatismus
      c) mittlerer Flächenbrechwert bezogen auf eine Brechzahl von n=1,60
      d) Flächenastigmatismus bezogen auf eine Brechzahl von n=1,60
      e) Brechzahlverteilung
      f) Fringe-Zernike-Koeffizienten der Brechzahlverteilung

Figur 4    optische Eigenschaften eines Vergleichs-Gleitsicht-Brillenglases mit derselben Geometrie wie das erfindungsgemäße Gleitsicht-Brillenglas nach der Figur 3, gerechnet basierend auf einem Substrat aus einem Material mit konstanter Brechzahl von n=1,60

      a) mittlere Wirkung
      b) Restastigmatismus

Es wird bei dem nachfolgend beschriebenen Ausführungsbeispiel von folgenden Anforderungen ausgegangen:

    Sphärische Wirkung: Sph=0,00 D
    Zylindrische Wirkung: Zyl=0,00 D
    Nahzusatz: Add=2,50 D
    Progressionslänge: L=14 mm
    Vorneigung: 9 Grad
    Fassungsscheibenwinkel: 5 Grad
    Abstand zum Augendrehpunkt: 25,5 mm
    Objektabstand Nähe: 380 mm
    Vorderfläche sphärisch mit Radius R = 109,49 mm
    Rückseite Freiformfläche
    Mittendicke 2,55 mm

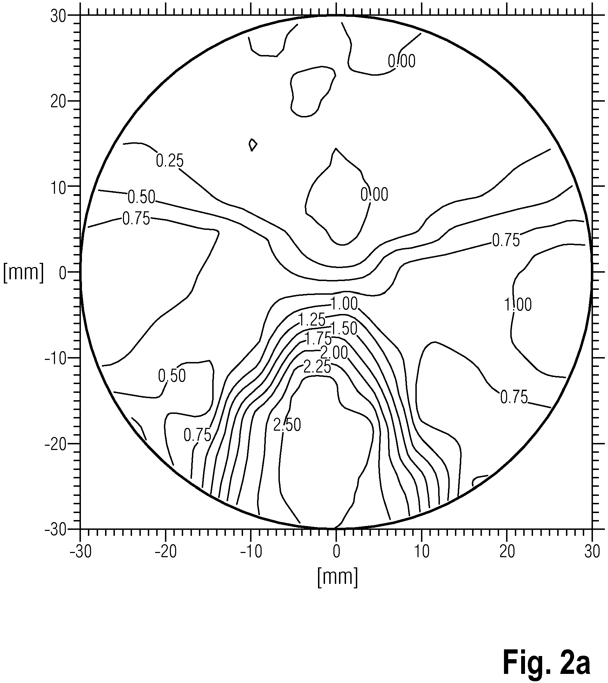

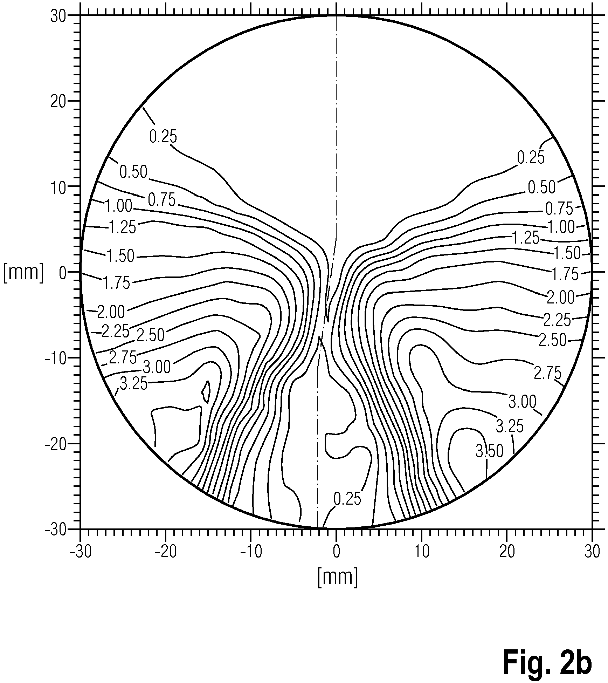

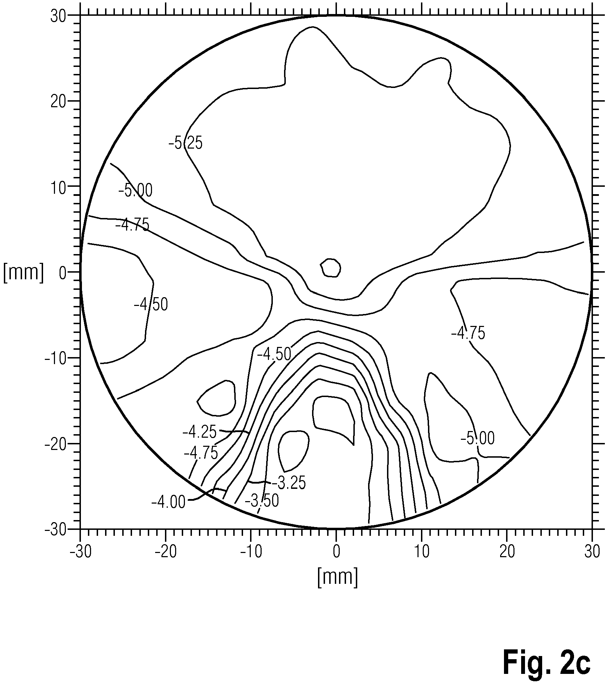

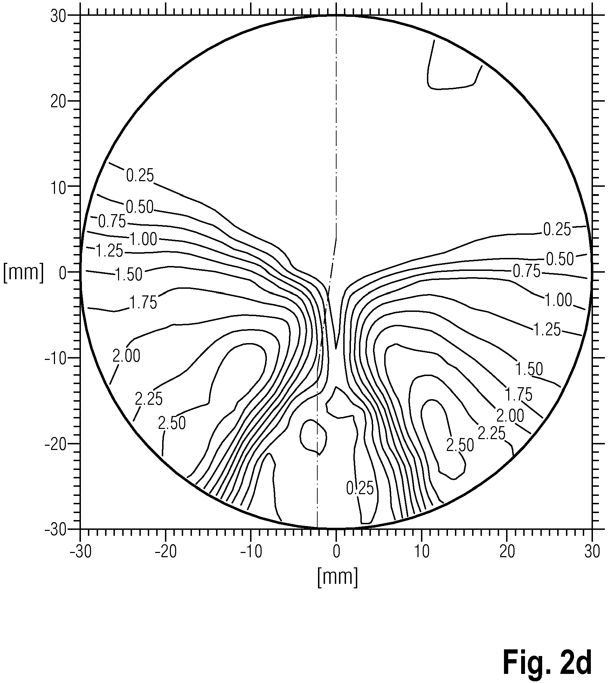

Die Figur 2 zeigt optische Eigenschaften eines Gleitsicht-Brillenglases mit einem Substrat aus einem Material mit konstanter Brechzahl von n=1,60 nach dem Stand der Technik. Der Figur 2a) entnimmt man die mittlere Wirkung. Der Brillenträger erhält beim Blick horizontal geradeaus (d.h. für einen Durchblickpunkt durch das Glas von 4 mm oberhalb der geometrischen Mitte) eine mittlere Wirkung von 0 dpt und bei einem Blick durch den Punkt 11 mm unterhalb der geometrischen Mitte und -2,5 mm horizontal in nasaler Richtung eine mittlere Wirkung von 2,50 dpt. D.h. auf einer Länge von 15 mm steigt demnach die Glaswirkung um ca. 2,50 dpt an.

Der in Figur 2b) gezeigte Restastigmatismusverlauf des Gleitsicht-Brillenglases nach dem Stand der Technik zeigt den nach dem Satz von Minkwitz zu erwartenden Anstieg des Restastigmatismus in Richtung senkrecht zur Hauptblicklinie. Im gezeigten Beispiel ergeben sich folgende Werte für die Breite des Bereichs mit Restastigmatismus < 1 dpt (Progressionskanal):

Bei 0.25*Addition: 6.1 mm
Bei 0.50*Addition: 4.6 mm
Bei 0.75*Addition: 5.0 mm

In der Zeichnung entspricht dies den y-Werten -0.5 mm, -4 mm, -7.5 mm. Die Hauptblicklinie ist in der Zeichnung markiert.

Figur 2c) zeigt die Verteilung des mittleren Flächenbrechwerts der als Freiformfläche ausgebildeten Rückfläche. Die Flächenkrümmung nimmt von oben nach unten stetig ab, der mittlere Flächenbrechwert steigt von -5,50 dpt bei y = ca. 2 mm auf -3,50 dpt bei y = -15 mm.

Die Verteilung des Flächenastigmatismus der Rückfläche des Gleitsicht-Brillenglases nach dem Stand der Technik, der der Figur 2d) zu entnehmen ist, entspricht hier genau dem Restastigmatismus des Glases: verschwindender Astigmatismus im Fernteil und im Progressionskanal, seitlich des Progressionskanals rascher Anstieg des Astigmatismus.

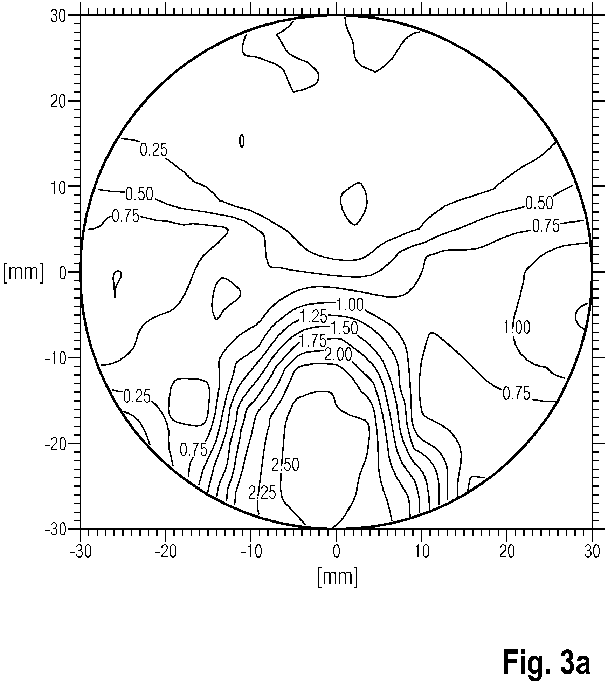

Ein erfindungsgemäßes Gleitsicht-Brillenglas zeichnet sich nunmehr durch die nachfolgend beschriebenen und in den Figuren 3a) bis 3f) dargestellten optischen Eigenschaften aus.

Der Figur 3a) entnimmt man die Verteilung der mittleren Wirkung, welche der Verteilung der mittleren Wirkung des Gleitsicht-Brillenglases nach dem Stand der Technik, dargestellt in Figur 2a), entspricht. Insbesondere entnimmt man den Figuren 2a) und 3a), dass der Wirkungsanstieg entlang der Hauptblicklinie im Progressionsbereich gleich ist.

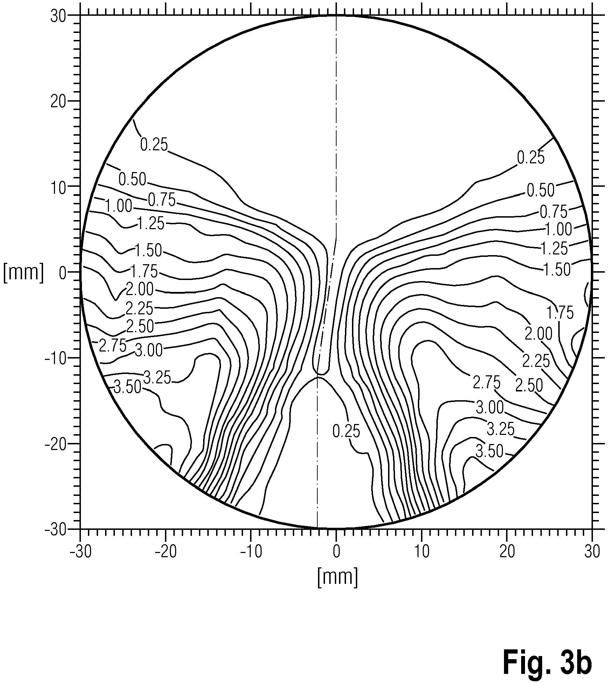

Der in Figur 3b) gezeigte Restastigmatismusverlauf zeigt einen Anstieg des Restastigmatismus in Richtung senkrecht zur Hauptblicklinie, der bei dem erfindungsgemäßen GRIN-Gleitsicht-Brillenglas deutlich geringer ausfällt als nach dem Stand der Technik. Im gezeigten Beispiel ergeben sich folgende Werte für die Breite des Bereichs mit Restastigmatismus < 1 dpt (Progressionskanal):

Bei 0.25*Addition: 7.3 mm
Bei 0.50*Addition: 6.0 mm
Bei 0.75*Addition: 6.5 mm

In der Zeichnung entspricht dies den y-Werten -0.5 mm, -4 mm, -7.5 mm.

Die Kanalverbreiterung gegenüber dem Glas mit konstanter Brechzahl beträgt also überall mindestens 1.2 mm, was einer Verbreiterung um mindestens 20 % entspricht.

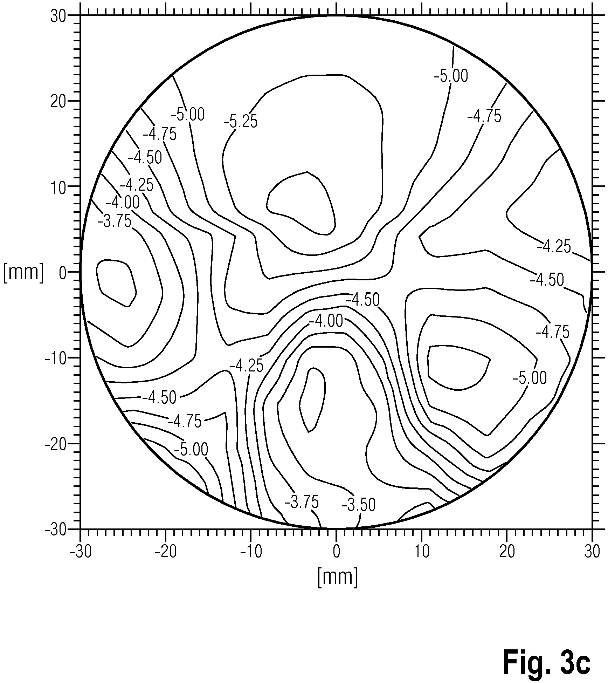

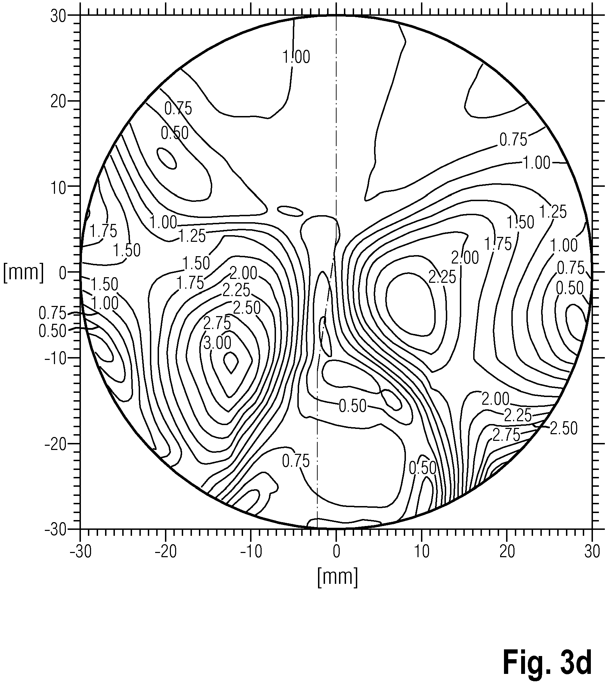

Figur 3c) zeigt den auf eine Brechzahl von n=1,60 bezogenen mittleren Flächenbrechwert der rückseitigen Freiformfläche und Figur 3d) zeigt den auf eine Brechzahl von n=1,60 bezogenen Flächenastigmatismus der rückseitigen Freiformfläche. Um einen Vergleich der mittleren Krümmungen mit der Figur 2c) und des Flächenastigmatismus mit der Figur 2d) zu ermöglichen, wurde bei der Berechnung nicht das GRIN-Material, sondern ein Material mit der Brechzahl n = 1.600 verwendet.

Der Vergleich der Figuren 2c) und 2d) mit den Figuren 3c) und 3d) zeigt, dass sich die Gestalt der Freiformfläche deutlich geändert hat: sowohl die Verteilung des mittleren Flächenbrechwerts als auch die Verteilung des Flächenastigmatismus (gerechnet mit n = 1.600) lassen keinen typischen Progressionskanal mehr erkennen. Aus der Flächenform allein lässt sich bei dem erfindungsgemäßen GRIN-Gleitsicht-Brillenglas nicht erkennen, dass es sich um ein Gleitsichtglas handelt: der Astigmatismus im Fernteil und im Progressionskanal verschwindet nicht.

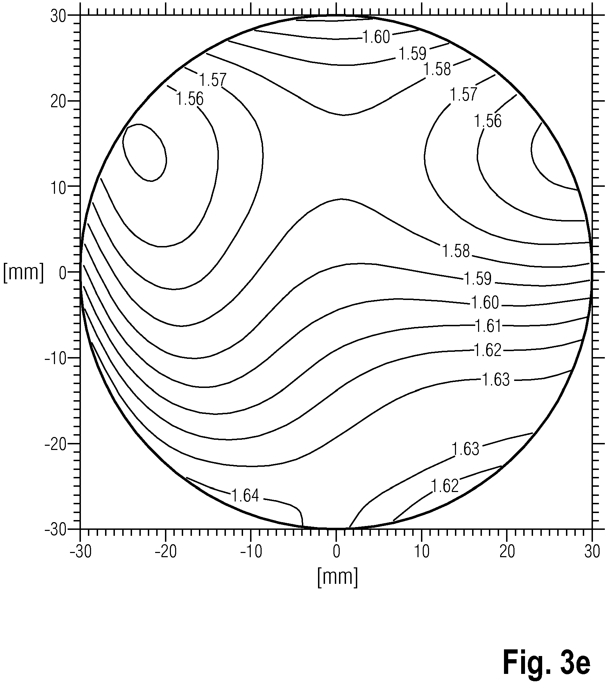

Die Brechzahlverteilung des erfindungsgemäßen Gleitsicht-Brillenglases zeigt die Figur 3e). Diese zeichnet sich dadurch aus, dass sie weder Punkt- noch Achsensymmetrie aufweist. Die minimale Brechzahl von 1,55 tritt im oberen seitlichen Bereich auf, die maximale Brechzahl von 1,64 im unteren Bereich. Die Brechzahlverteilung ist in der Richtung senkrecht zur dargestellten Ebene invariant, sie verändert sich also nur in zwei Raumdimensionen.

Die Gleichung

$$n = 1{,}60 + \sum_{n=1}^{36} c_n Z_n(x, y)$$

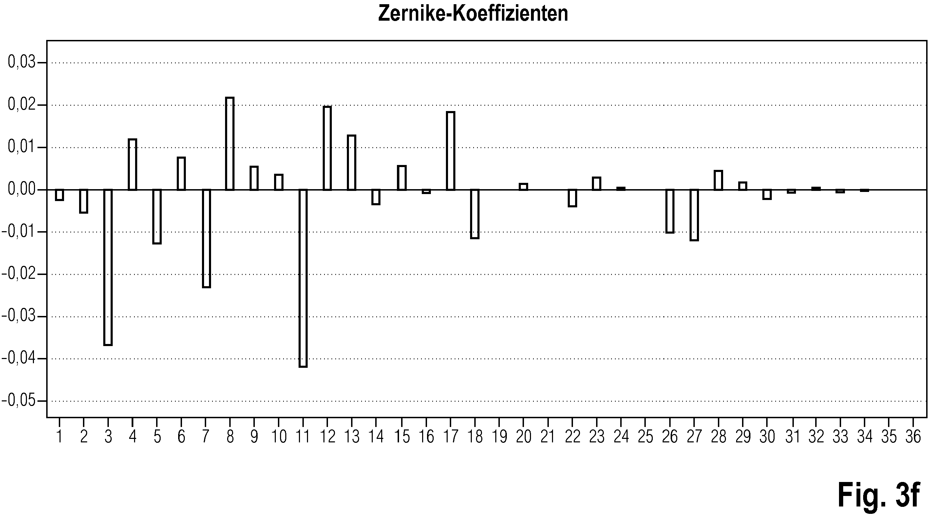

stellt eine Fringe-Zernike-Reihenentwicklung der Brechzahlverteilung des erfindungsgemäßen Gleitsicht-Brillenglases dar. $Z_n(x,y)$ bezeichnet die Fringe-Zernike-Polynome in kartesischen Koordinaten. Figur 3f) entnimmt man die Fringe-Zernike-Koeffizienten der Brechzahlverteilung des erfindungsgemäßen Gleitsicht-Brillenglases nach dem Beispiel.

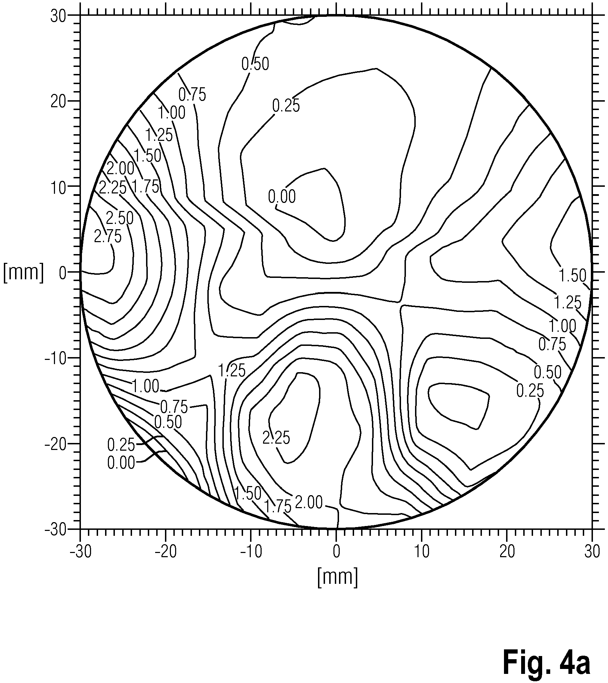

Zum Vergleich zeigen die Figuren 4a) und 4b) optische Eigenschaften eines Vergleichs-Gleitsicht-Brillenglases mit derselben Geometrie wie das erfindungsgemäße Gleitsicht-Brillenglas nach der Figur 3, gerechnet basierend auf einem Substrat aus einem Material mit konstanter Brechzahl von n=1,60.

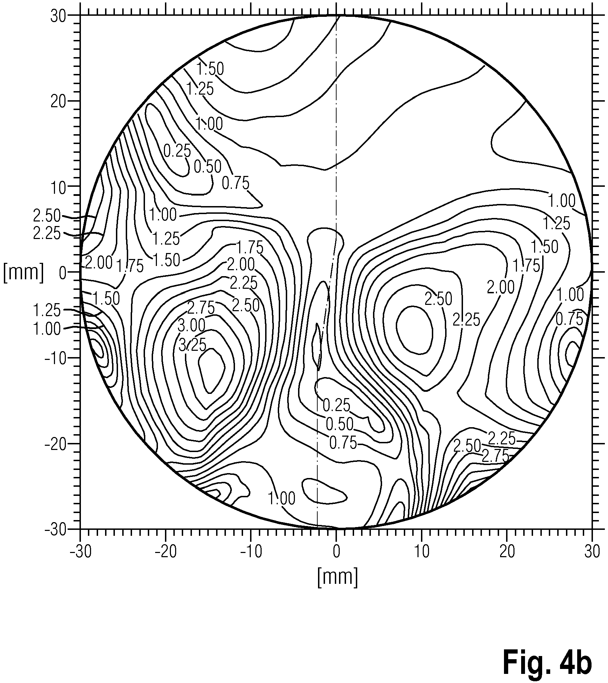

Die in den Figuren 4a) und 4b) gezeigten Verteilungen von mittlerer Wirkung und Restastigmatismus weisen nicht die für ein nutzbares Gleitsicht-Brillenglas erforderlichen Eigenschaften auf, insbesondere nicht für die hier beschriebenen Gebrauchsbedingungen und der erforderlichen optischen Korrektur für den Brillenträger. Wie man der Figur 4b) entnehmen kann, ist bereits im Fernbereich ein Restastigmatismus von mindestens 0.75 dpt vorhanden. Damit ist dieses Gleitsicht-Brillenglas für den hier betrachteten emmetropen Brillenträger nicht brauchbar. Die geforderte Nahteilwirkung von 2.5 dpt wird, wie man Figur 4a) entnehmen kann, nirgendwo erreicht. Darüber hinaus beträgt der Restastigmatismus in einem großen Bereich des Nahteils mehr als 1 dpt, wie Figur 4b) zeigt.

**Patentansprüche**

1. Erzeugnis umfassend (i) ein Gleitsicht-Brillenglas oder (ii) eine auf einem Datenträger befindliche Darstellung des Gleitsicht-Brillenglases oder (iii) einen Datenträger mit einer virtuellen Repräsentation des Gleitsicht-Brillenglases, wobei

   - das Gleitsicht-Brillenglas ein Substrat mit einer Vorderfläche und einer Rückfläche umfasst, welches aus einem Material mit räumlich variierenden Brechungsindex besteht,
   - die Vorderfläche und/oder die Rückfläche eine Freiformflächengeometrie besitzt/besitzen,
   - das Gleitsicht-Brillenglas einen Fern-Konstruktionsbezugspunkt und einen Nah-Konstruktionsbezugspunkt aufweist
   - das Gleitsicht-Brillenglas folgende optische Anforderungen erfüllt

      (1) eine verordnete dioptrische Wirkung im Fern-Konstruktionsbezugspunkt innerhalb der zulässigen Grenzabweichungen nach DIN EN ISO 8980-2:2004 und eine verordnete dioptrische Wirkung im Nah-Konstruktionsbezugspunkt innerhalb der zulässigen Grenzabweichungen nach DIN EN ISO 8980-2:2004
      (2) einen monoton stetigen Anstieg der dioptrischen Wirkung zwischen Fern-Konstruktionsbezugspunkt und Nah-Konstruktionsbezugspunkt auf einer Hauptblicklinie
      (3) einen den Fern-Konstruktionsbezugspunkt und den Nah-Konstruktionsbezugspunkt umschließenden Progressionskanal, welcher dadurch definiert ist, dass der Restastigmatismus unterhalb eines Wertes aus der Gruppe

         (a) 0,25 Dioptrien
         (b) 0,38 Dioptrien
         (c) 0,50 Dioptrien

      liegt

   **dadurch gekennzeichnet, dass**

      (i) die Freiformflächengeometrie der Vorderfläche und/oder der Rückfläche des Gleitsicht-Brillenglases und die räumliche Variation des Brechungsindex derart aufeinander abgestimmt sind, dass ein Vergleichs-Gleitsicht-Brillenglas mit gleicher Geometrie aber basierend auf einem Substrat aus einem Material mit räumlich nicht variierendem Brechungsindex wenigstens eine der optischen Anforderungen (1) bis (3) nicht erfüllt oder dass
      (ii) die Freiformflächengeometrie der Vorderfläche und/oder der Rückfläche des Gleitsicht-Brillenglases und die räumliche Variation des Brechungsindex derart aufeinander abgestimmt sind, dass für dieses Glas ein erster rechnerisch ermittelter Flächenastigmatismuswert der Fläche mit der Freiformflächengeometrie an der Stelle, durch die der zugehörige Brillenträgerstrahl durch den Ort auf der Hauptblicklinie verläuft, an dem dieses Glas die Hälfte des gesamten mittleren Wirkungsanstiegs erfährt, größer ist, als ein zweiter, für ein Vergleichs-Gleitsicht-Brillenglas mit einem Material mit räumlich nicht variierendem Brechungsindex rechnerisch ermittelter Flächenastigmatismuswert der Fläche mit Freiformflächengeometrie an der Stelle, an dem der zugehörige Brillenträgerstrahl durch den Ort auf der Hauptblicklinie verläuft, an dem dieses Vergleichs-Gleitsicht-Brillenglas die Hälfte des gesamten mittleren Wirkungsanstiegs erfährt, und wobei das Vergleichs-Gleitsicht-Brillenglas eine gleiche Lage der Fläche mit Freiformflächengeometrie und eine gleiche Geometrie der gegenüber liegenden Fläche, einen gleichen dioptrischen Wirkungsverlauf längs der Hauptblicklinie aufweist und der Brechungsindex einen Wert aufweist, der dem Wert des Brechungsindex des Substrats an der Stelle der Hauptblicklinie auf der Vorderfläche entspricht, an dem das Gleitsicht-Brillenglas mit dem Substrat aus dem Material mit räumlich variierendem Brechungsindex die Hälfte des gesamten dioptrischen Wirkungsanstiegs erfährt.

2. Erzeugnis nach Anspruch 1, **dadurch gekennzeichnet, dass** in dem Fall (ii) der Wert des ersten rechnerisch ermittelten Flächenastigmatismus

   - um wenigstens 0,25 Dioptrien größer als der Wert des zweiten rechnerisch ermittelten Flächenastigmatismus ist oder
   - um wenigstens ein Drittel des Werts der Nahzusatzwirkung größer als der Wert des zweiten rechnerisch ermittelten Flächenastigmatismus ist.

3. Erzeugnis nach Anspruch 1 oder 2, **dadurch gekennzeichnet, dass** in dem Fall (ii) der Wert des ersten rechnerisch ermittelten Flächenastigmatismus nicht nur an einer Stelle größer ist als der Wert des zweiten rechnerisch ermittelten Flächenastigmatismus, sondern in einem Bereich längs der Hauptblicklinie, in dem das Gleitsicht-Brillenglas und das Vergleichs-Gleitsicht-Brillenglas ein Viertel bis drei Viertel des gesamten dioptrischen Wirkungsanstiegs erfährt.

△Cyl ≈ 2x △Add

△Add

△Cyl

0.50
1.00
1.50
2.00

+0.50

+1.00

N

**Fig. 1**
**(Stand der Technik)**

Fig. 2a

**Fig. 2b**

**Fig. 2c**

Fig. 2d

Fig. 3a

**Fig. 3b**

**Fig. 3c**

Fig. 3d

Fig. 3e

Zernike-Koeffizienten

Fig. 3f

EP 3 598 213 A1

**Fig. 4a**

Fig. 4b

Europäisches
Patentamt

European
Patent Office

Office européen
des brevets

# EUROPÄISCHER RECHERCHENBERICHT

Nummer der Anmeldung

EP 18 18 4779

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | WO 99/13361 A1 (BIANCO GRAZIANO [IT]) 18. März 1999 (1999-03-18) * Seite 7, Zeile 14 - Zeile 22 * ----- | 1-3 | INV. G02C7/06 |
| X,D | US 2010/238400 A1 (VOLK DONALD A [US]) 23. September 2010 (2010-09-23) * Absatz [0022] * * Absatz [0003] * * Absatz [0036] * * Absatz [0110] * * Absatz [0115] * * Absatz [0121] * ----- | 1-3 | |
| A | YUKI SHITANOKI ET AL: "Application of Graded-Index for Astigmatism Reduction in Progressive Addition Lens", APPLIED PHYSICS EXPRESS, Bd. 2, 1. März 2009 (2009-03-01), Seite 032401, XP055392139, JP ISSN: 1882-0778, DOI: 10.1143/APEX.2.032401 * das ganze Dokument * ----- | 1-3 | |

| | | | RECHERCHIERTE SACHGEBIETE (IPC) |
|---|---|---|---|
| | | | G02C |

Der vorliegende Recherchenbericht wurde für alle Patentansprüche erstellt

| Recherchenort | Abschlußdatum der Recherche | Prüfer |
|---|---|---|
| München | 27. November 2018 | Stadlmeyer, R |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

........................................................................................................

& : Mitglied der gleichen Patentfamilie, übereinstimmendes
    Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 18 18 4779

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-11-2018

| Im Recherchenbericht angeführtes Patentdokument | Datum der Veröffentlichung | Mitglied(er) der Patentfamilie | Datum der Veröffentlichung |
|---|---|---|---|
| WO 9913361 A1 | 18-03-1999 | AU 9439998 A<br>IT MI972047 A1<br>WO 9913361 A1 | 29-03-1999<br>09-03-1999<br>18-03-1999 |
| US 2010238400 A1 | 23-09-2010 | KEINE | |

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 8904986 A1
- WO 9913361 A1
- US 2010238400 A1
- EP 2177943 A1

**In der Beschreibung aufgeführte Nicht-Patentliteratur**

- **MINKWITZ, G.** Über den Flächenastigmatismus bei gewissen symmetrischen Asphären. *Optica Acta,* Juli 1963, vol. 10 (3), 223-227
- **DIEPES H. ; BLENDOWSKE R.** Optik und Technik der Brille. 2005, 256
- **DIEPES H. ; BLENDOWSKE R.** Optik und Technik der Brille. 2005, 257f
- **YUKI SHITANOKI et al.** Application of Graded-Index for Astigmatism Reduction in Progressive Addition Lens. *Applied Physics Express,* 01. Marz 2009, vol. 2, 032401